(19) Europäisches Patentamt
European Patent Office
Office européen des brevets

(11) **EP 3 328 804 B1**

(12) **EUROPÄISCHE PATENTSCHRIFT**

(45) Veröffentlichungstag und Bekanntmachung des Hinweises auf die Patenterteilung:
**06.05.2020 Patentblatt 2020/19**

(21) Anmeldenummer: **16759676.6**

(22) Anmeldetag: **13.07.2016**

(51) Int Cl.:
*C03B 37/018* (2006.01)     *C03B 37/025* (2006.01)

(86) Internationale Anmeldenummer:
**PCT/DE2016/100311**

(87) Internationale Veröffentlichungsnummer:
**WO 2017/016539 (02.02.2017 Gazette 2017/05)**

(54) **VERFAHREN ZUM DEFINIERTEN ABSCHEIDEN EINER GLASSCHICHT AN EINER INNENWAND EINER VORFORM**

METHOD FOR THE DEFINED DEPOSITION OF A GLASS LAYER ON AN INNER WALL OF A PREFORM

PROCÉDÉ DE DÉPÔT DÉFINI D'UNE COUCHE DE VERRE SUR UNE PAROI INTÉRIEURE D'UNE PRÉFORME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2015 DE 102015112382**

(43) Veröffentlichungstag der Anmeldung:
**06.06.2018 Patentblatt 2018/23**

(73) Patentinhaber: **J-Fiber GmbH**
**07751 Jena (DE)**

(72) Erfinder:
• **HANF, Robert**
**07607 Eisenberg (DE)**
• **GENZ, Christian**
**07749 Jena (DE)**
• **BREHM, Lothar**
**07743 Jena (DE)**

(74) Vertreter: **Weidner Stern Jeschke**
**Patentanwälte Partnerschaft mbB**
**Universitätsallee 17**
**28359 Bremen (DE)**

(56) Entgegenhaltungen:
**EP-A1- 1 719 739**     **JP-A- S5 864 236**
**JP-A- S60 137 840**     **JP-B2- S6 212 181**
**US-A- 4 813 989**     **US-A1- 2006 185 398**
**US-A1- 2013 081 430**

EP 3 328 804 B1

**Beschreibung**

Die Erfindung betrifft ein Verfahren zum definierten Abscheiden einer Glasschicht an einer Innenwand einer Vorform für eine optische Faser und/oder zum Einstellen eines Brechzahlprofils einer Vorform für eine Multimodenfaser, wobei in einem durch die Innenwand gebildeten Hohlraum der Vorform ein Abscheidegas mit einer Strömungsgeschwindigkeit v geführt wird und eine Vorform oder Glasfaser sowie ein Kommunikationssystem.

Die US4813989 gibt ein Verfahren zur Durchmesserregelung an. Dabei wird über einen Lüfter in eine Druckkontrollkammer eine definierte Menge an Gas eingeblasen, um die Druckverhältnisse im Rohr so zu beeinflussen, dass der Außendurchmesser des Rohres während der Innenabscheidung konstant bleibt.

In der JP62012181 wird ein Verfahren beschrieben, dass die Druckregelung nur in einer Richtung verwendet. Im Rücklauf wird der Druck dann entsprechend konstant gehalten. Durch die Regelung im Hinlauf soll auch erreicht werden, dass der Außendurchmesser konstant bleibt.

In der JP3052418 wird ein Verfahren zum Konstanthalten des Innendruckes innerhalb des Substratrohres während der Abscheidung beschrieben. Dabei wird ein Ventil an der Abgasseite der Anlage verwendet um den Druck zu regeln.

Eine Kombination der vorgenannten Methoden wird in EP1719739 beschrieben. Dabei wird die Druckregelung durch mehrere Teilströme realisiert. Diese Teilströme können sowohl an der Gaseingangsseite vorgesehen sein, als auch an der Ausgangsseite. Dabei wird zumindest ein Teilstrom nur gesteuert und mindestens ein Teilstrom geregelt ausgeführt. Dabei wird über die Rohrlänge eine Zunahme des Rohrinnendruckes vom Anfang zum Ende vorgegeben und über die Regelung erreicht, dass der Außendurchmesser über die Rohrlänge konstant gehalten wird und somit die Parameter der aus der Vorform erhaltenen Faser sehr geringe Abweichungen zeigen. Weiterhin kann ein Einwandern von Glasruß aus dem Austragesystem minimiert werden.

In der US2013081430 wird ein Verfahren beschrieben, bei dem das Substratrohr zumindest während eines Teils der Innenabscheidung aufgeblasen wird. Durch die Vergrößerung des Außendurchmessers werden vorteilhafte Wirkungen für die Geometrie des Substratrohres erzielt, so dass Verdrehungen und Durchbiegungen des Substratrohres reduziert werden können. Dadurch findet eine gleichmäßigere Abscheidung statt, so dass die Faserparameter aus der verzogenen Vorform in einem deutlich geringeren Toleranzband gehalten werden können.

Die meisten der genannten Verfahren sind dazu geeignet den Außendurchmesser der Vorform während des Beschichtungsprozesses konstant zu halten. Allerdings hat der Außendurchmesser kaum einen Einfluss auf die Abscheidung, die im Rohrinneren stattfindet. Daher führen diese Verfahren dazu, dass einzelne im Inneren abgeschiedene Glasschichten undefinierte und/oder stark variierende Dicken und Verläufe haben. Daraus ergeben sich teilweise erhebliche Störungen im Brechzahlprofil. Mithin werden Multimodenfasern, die nach dem Stand der Technik hergestellt werden, messtechnisch charakterisiert und entsprechend den Qualitätsklassen zugeordnet. Dabei haben die Störungen im Brechzahlprofil einen erheblichen Einfluss auf den Anteil an Fasern der einzelnen Qualitätsklassen. Je weniger Störungen im Brechzahlprofil auftreten und je kleiner die Brechungsindexabweichungen sind, umso höher ist die Ausbeute an Fasern in den gewünschten Qualitätsklassen.

Die JP S58 64 236 A offenbart ein MCVD-Verfahren zum Herstellen einer Vorform für eine Multimodenfaser, wobei ein Abscheiden von Glasoxidschichten aus der Gasphase auf eine Innenwand eines Glassubstratrohres unter Einstellen des Brechzahlprofils für die Multimodemfaser erfolgt, wobei die Fließgeschwindigkeit des Gases und/oder die Bewegungsgeschwindigkeit des Brenners kontrolliert werden. In der US 2006 / 185 398 A1 wird eine Methode zur Herstellung einer Vorform für eine Multimodemfaser beschrieben, bei welcher das Brechzahlprofil beim Abscheiden über ein Verhältnis eines das Brechzahlprofil kontrollierenden Material zu einem glasformenden Material eingestellt wird.

Aufgabe der Erfindung ist es, den Stand der Technik zu verbessern.

Gelöst wird die Aufgabe durch ein Verfahren zum definierten Abscheiden einer Glasschicht an einer Innenwand einer Vorform für eine optische Faser und/oder zum Einstellen eines Brechzahlprofils einer Vorform für eine Multimodenfaser, wobei sich in einem durch die Innenwand gebildeten Hohlraum der Vorform ein Abscheidegas mit einer Strömungsgeschwindigkeit v ausbreitet, wobei sich aufgrund des Abscheidens eine Strömungsgeschwindigkeitsänderung

$$\Delta v = \frac{4Q}{\pi} \cdot \left( \frac{1}{d_i^2} - \frac{1}{d_{i+1}^2} \right)$$

mit einem Volumenstrom Q, dem Erstdurchmesser $d_i$ und dem Zweitdurchmesser $d_{i+1}$ ausbildet, wobei das Abscheiden bei einer verringerten Strömungsgeschwindigkeitsänderung $a*\Delta v$ geführt wird, wobei $a<0.95$ ist.

Durch das vorgeschlagene Verfahren können störende Effekte beim Erstellen des Brechzahlprofils minimiert werden und es kann insbesondere durch eine Vorgabe der Volumenströme brechzahlgesteuert und gezielt das Brechzahlprofil eingestellt werden. Mithin wird dadurch die Ausbeute an Fasern mit vorgegebener Bandbreite und somit einer höheren Ausbeute von gewünschten Qualitätskennzahlen gewährleistet.

Der Kerngedanke der Erfindung beruht insbesondere auf der gewonnenen Erkenntnis, dass die Strömungsgeschwindigkeitsänderung für das Einstellen des Brechzahlprofils und mithin für die exakt einzuhaltende Dicke des Profils oder einzelner Schichten des Profils verwendbar ist. Somit ist der steuerungstechnisch oder regelungstechnisch maßgebliche Prozessparameter die Strömungsgeschwindigkeitsänderung.

Es wird also die Qualität insbesondere bei Multimodenfasern und die Ausbeute hervorragender Multimodenfasern dadurch gewährleistet, dass als Prozessparameter für das Einstellen der Brechzahl und somit des Brechzahlprofils die Änderung der Strömungsgeschwindigkeit mitbestimmend ist.

Da insbesondere bei Innenabscheideverfahren, wie sie vorliegend verwendet werden, sich automatisch die Strömungsgeschwindigkeit mit verringertem Innendurchmesser ändert, schlägt die Erfindung vor, diese Änderungen prozessgesteuert zu minimieren.

Dafür können prinzipiell verschiedene Verfahren verwendet werden. Zum einen ist es möglich mit einem Substratrohr zu starten, das einen sehr großen Innendurchmesser aufweist. Damit wird erreicht, dass die abgeschiedene Glasmenge eine geringere Dicke aufweist, als bei einem Substratrohr mit geringerem Innendurchmesser. Dadurch vermindert sich der Innendurchmesser weniger stark, je größer der Startinnendurchmesser gewählt worden ist. Auch für die Stabilität der Substratrohre hat ein größerer Startinnendurchmesser Vorteile. Allerdings führt die Verwendung von Substratrohren mit großem Startinnendurchmesser beim auf die Innenabscheidung folgenden Kollabieren zu erhöhten Prozesslaufzeiten.

Weitaus bedeutender kann allerdings der negative Einfluss eines erhöhten Startinnendurchmessers auf die Effizienz der Abscheidung sein. Bei Verwendung eines großen Innendurchmessers ist die Entfernung der in der Reaktionszone im Rohrinneren gebildeten Glasartikel bis zur Rohrwandung, an der Sie abgeschieden werden müssen, deutlich größer. Damit sinkt die Abscheiderate erheblich und ein Großteil des Glasrußes wird am Ende des Substratrohres ausgetragen. Dieser Glasruß findet sich nicht in der späteren Preform und/oder Faser wieder und muss aufwändig gereinigt und entsorgt werden. Zum anderen kann auch die Gasmenge, die für die Innenabscheidung bereitgestellt wird, zunehmend reduziert werden.

Damit wird der Volumenstrom reduziert und gleicht die Abnahme des Innendurchmessers zumindest teilweise aus. Da sich der maßgebliche Gesamtvolumenstrom aus einer Vielzahl von Teilvolumenströmen zusammensetzt, kann eine Abnahme dadurch erreicht werden, dass einzelne Teilvolumenströme reduziert werden, was zu einer Veränderung der Zusammensetzung der Reaktionsmischung führt, oder es werden alle Teilvolumenströme im gleichen Verhältnis verringert, wodurch allerdings auch die Teilvolumenströme der glasbildenden Ausgangsstoffe verringert werden. Das führt wiederum zu einer reduzierten Abscheiderate. Daraus ergibt sich die zu lösende Problemstellung wie folgt:

Für die Effizienz der Innenabscheidung ist ein möglichst kleiner Innendurchmesser wünschenswert.

Für die Prozessstabilität und die Qualität des Brechzahlprofiles ist ein möglichst großer Innendurchmesser wünschenswert. Es ergibt sich ein optimaler Innendurchmesser, der sowohl die Abscheideeffizienz als auch die Profilqualität berücksichtigt. In Abhängigkeit der zu erreichenden Brechzahl, bzw. des notwendigen Dotandengehaltes kann es sogar für jede Schicht unterschiedliche optimale Innendurchmesser geben. Erfindungsgemäß wird daher mit einem Substratrohr gestartet, dessen Innendurchmesser einen bestimmten Wert aufweist und dann für jede Schicht ein entsprechender optimaler Innendurchmesser eingestellt.

Folgendes Begriffliche sei erläutert:
Das erfindungsgemäße "Verfahren" umfasst sämtliche Innenabscheideverfahren für Vorformen. Zu diesen Innenabscheideverfahren gehören beispielsweise die modifizierte chemische Gasphasenabscheidung (die MCVD = Modified Chemical Vapour Deposition), die FCVD (Furnance Chemical Vapour Deposition) und die PCVD (Plasma Chemical Vapour Deposition). Letztendlich werden glasbildende Substanzen und beispielsweise Dotierungsstoffe an der Innenwand abgeschieden und anschließend entsprechend durch Beaufschlagen von Wärme verglast. Die einzelnen Innenabscheideverfahren unterscheiden sich insbesondere durch die Art, wie der Vorform die Wärme aufgeprägt wird.

Unter "Abscheiden einer Glasschicht" wird insbesondere ein Verringern des Innendurchmessers durch ein Abscheiden und somit ein Kondensieren eines gasförmigen Glasstoffes an der Innenwand der Vorform verstanden. Eine Glasschicht umfasst dabei insbesondere eine Schicht mit einem weitgehend einheitlichen Brechungsindex.

Eine "Innenwand" einer Vorform ist insbesondere der Teil, an welchem im Inneren eines Rohres das Abscheiden der Glasschicht erfolgt. Dabei ist die Innenwand ein flächiges Gebilde, an dem sich aus dem Gas heraus die einzelnen Glaselemente abscheiden.

Eine "Vorform" wird insbesondere auch Preform genannt. Diese Vorform ist die Basis für eine Glasfaser und wird beispielsweise nach einem Kollabieren zu einer optischen Faser gezogen. In Abhängigkeit vom gewünschten Fasertypen können zwischen dem Kollabieren und dem Faserziehen weitere Prozessschritte ausgeführt werden. Insbesondere können weitere Glasschichten auf die Vorform aufgebracht werden. Damit lässt sich das Verhältnis von Kern- zu Manteldurchmesser einstellen. Für bestimmte Fasertypen werden auch weitere dotierte Schichten auf die Vorform aufgebracht, so dass zusätzliche Eigenschaften, beispielsweise eine Unempfindlichkeit gegenüber Biegungen erreicht werden kann.

Eine "optische Faser" umfasst sowohl Monomodenfasern als auch Multimodenfasern, welche entsprechend in der Nachrichtentechnik eingesetzt werden. Insbesondere bei kurzen Übertragungsstrecken werden die Multimodenfasern eingesetzt. Diese weisen in der Regel einen Kerndurchmesser von $50\,\mu m$ bis $62{,}5\,\mu m$

auf. Derartige Multimodenfasern haben in der Regel ein definiertes Brechzahlprofil, sodass möglichst alle Moden ohne Zeitversatz durch die Faser propagieren können. Ein derartiges "Brechzahlprofil" hat in der Regel eine Gradientenindexform.

Eine "Strömungsgeschwindigkeit v" ist insbesondere die Geschwindigkeit, mit der das Abscheidegas durch die Vorform geführt wird.

Die "Strömungsgeschwindigkeitsänderung Δv" ist insbesondere die Geschwindigkeitsänderung der Strömungsgeschwindigkeit des Abscheidegases, wie sie beispielsweise durch die Änderung eines Innendurchmessers hervorgerufen wird. Die Strömungsgeschwindigkeitsänderung kann auf unterschiedliche Weise beeinflusst werden. Dabei kann beispielsweise der Innendurchmesser vergrößert oder aber die Zusammensetzung des Abscheidegases verändert werden.

Ein "Volumenstrom Q" ist insbesondere das Volumen eines Abscheidegases, das sich innerhalb einer Zeitspanne durch den Querschnitt (insbesondere die Querschnittsfläche des Vorforminneren) bewegt bezogen auf eine Zeitspanne.

Sowohl der "Erstdurchmesser $d_i$" als auch der "Zweitdurchmesser $d_{i+1}$" bezeichnen vorliegend den Durchmesser, welcher ohne Einflussnahme auf die Zusammensetzung des Abscheidegases und/oder des Innendurchmessers ausbildet. Dabei ist insbesondere der Erstdurchmesser $d_i$ der Durchmesser, welcher vor einem Abscheiden der Glasschicht und der Zweitdurchmesser $d_{i+1}$ der Durchmesser nach dem Abscheiden der Glasschicht vorliegt. Aber auch Zwischenwerte oder mehrere Schichten zusammen sind mit umfasst.

Die Größe "a" ist insbesondere ein Maß dafür, wie stark durch einen Einfluss auf die Prozessparameter die Strömungsgeschwindigkeitsänderung reduziert wird. Im Idealfall ist a=0, da somit die Strömungsgeschwindigkeit konstant gehalten wird und eine Strömungsgeschwindigkeitsänderung nicht vorliegt. Insbesondere bei sehr geringen Innendurchmessern, können aber auch Werte oberhalb von 0 und unterhalb 0.95 toleriert werden, da diese es immer noch ermöglichen, ein definiertes Brechzahlprofil ausreichender Qualität zur Verfügung zu stellen.

In einer Ausführungsform ist a<0,9 oder a<0,8 oder a<0,7 oder a<0,6 oder a<0,4 oder a<0,35.

Um die Strömungsgeschwindigkeitsänderung Δv zu verringern, kann ein Aufweiten eines Innendurchmessers erfolgen. Dabei kann der Innendurchmesser beispielsweise durch einen Differenzdruck zwischen dem Hohlraum und einem Prozessraum und/oder durch ein Ändern einer Rotationsgeschwindigkeit der Vorform aufgeweitet werden.

Im Regelfall wird die Vorform in einer rotierenden Glasdrehbank bearbeitet. Insbesondere in den Fällen, in denen eine Gasflamme die Vorform erhitzt, erfolgt die Wärmebehandlung bei rotierender Vorform. Die Rotation wird beispielsweise durch die Glasdrehbank der Vorform aufgeprägt. Dabei ist das Hauptaugenmerk auf eine homogene Wärmeverteilung, wobei oberhalb einer Drehzahl, welche eine homogene Wärmeverteilung erfolgt, zusätzlich aufgrund von Zentrifugalkräften der Innendurchmesser erfindungsgemäß gesteuert erweitert werden kann.

Auch kann für jede abzuscheidende Schicht eine optimale Strömungsgeschwindigkeitsänderung Δv eingestellt werden.

Unter optimal wird erfindungsgemäß der Innendurchmesser verstanden, bei dem eine hinreichend kleine Abweichung des Brechungsindex erreicht werden kann. Diese Abweichung kann aus der benötigten Bandbreite errechnet werden. Weiterhin wird für den optimalen Innendurchmesser noch die Abscheideeffizienz zu Grunde gelegt. Darunter wird verstanden, wie viel Masse Glas an der Rohrinnenwandung abgeschieden wird, bezogen auf die Menge an eingesetzten glasbildenden Substanzen. Der optimale Innendurchmesser ergibt sich aus der Kombination von maximaler Abscheideeffizienz (in der Regel umso größer, je kleiner der Innendurchmesser ist) unter Einhaltung der maximal tolerierbaren Brechungsindexabweichung (in der Regel kleiner bei größerem Innendurchmesser).

Ganz besonders vorteilhaft ist es, wenn das Verfahren in einem Prozessraum durchgeführt wird, welcher einen definierten Druck aufweist. Dieser Druck kann mit dem Atmosphärendruck identisch sein, oder wird den Erfordernissen des Innenabscheideverfahrens angepasst. Zudem kann in dem Hohlraum der Vorform ebenfalls ein definierter Druck eingestellt werden. Beim MCVD/FCVD-Verfahren wird in der Regel bei Atmosphärendruck gearbeitet, bei PCVD wird mit Unterdruck gearbeitet. Dadurch, dass langsam, mit zunehmendem Abscheiden von Glasschichten, der Druck im Prozessraum verringert oder im Hohlraum der Vorform erhöht wird, wird der Hohlraum und mithin die Vorform aufgeweitet. Dieses Aufweiten führt zu einem Vergrößern des Innendurchmessers, wodurch sich wiederum die Änderung der Strömungsgeschwindigkeitsänderung Δv verringert.

Eine Änderung einer Zusammensetzung des Abscheidegases kann ebenfalls zu einer Einflussnahme auf die Strömungsgeschwindigkeit v und somit auf die Strömungsgeschwindigkeitsänderung Δv führen. Dies wird vorliegend ebenfalls ausgenutzt. Mithin besteht das Abscheidegas aus einer Zusammensetzung unterschiedlicher Gase, wie beispielsweise ein Transportgas, das eigentliche Glas-Gas, welches abgeschieden wird, den Dotanden und sonstigen Bestandteilen.

In einer weiteren Ausführungsform des Verfahrens wird der Volumenstrom Q des Abscheidegases verändert.

Üblicherweise beträgt ein Volumenstrom des Abscheidegases 5L/min. Dieser Volumenstrom kann dann beispielsweise im Laufe des Abscheideprozesses kontinuierlich oder diskontinuierlich auf 2L/min abgesenkt werden.

Somit kann durch das Zusammenspiel von geändertem Volumenstrom, geänderter Zusammensetzung und Einflussnahme auf den Innendurchmesser die Strömungsgeschwindigkeitsänderung Δv entsprechend den Bedürfnissen eingestellt werden.

Um das Brechzahlprofil besser einstellen zu können, kann ein Bestimmen des Innendurchmessers erfolgen.

Dabei handelt es sich um den aktuellen Innendurchmesser, welcher aufgrund der eingestellten Prozessparameter bestimmt wird.

Dabei erfolgt das Bestimmen des (aktuellen) Innendurchmessers insbesondere dadurch, dass an einem Einlass eine Konzentration bestimmter Gase, beispielsweise des Gases, das abgeschieden wird, gemessen wird und eine Konzentrationsbestimmung an einem Auslass erfolgt. Dadurch, dass sich auf dem Weg vom Einlass zum Auslass Glas an der Innenwand der Vorform abgeschieden hat, kann auf die Dicke der abgeschiedenen Glasschicht geschlossen werden. Insbesondere dadurch, dass der Anfangsdurchmesser bekannt ist, kann somit aufaddierenderweise der aktuelle Innendurchmesser bestimmt werden. Dieses Verfahren ist gänzlich unabhängig vom eigentlichen erfindungsgemäßen Verfahren und kann mithin für sämtliche Innenabscheideverfahren für Vorformen und Glaszylinder verwendet werden.

Dabei kann die Konzentrationsbestimmung beispielsweise durch ein Infrarotspektrometer (IR-Spektrometer) bestimmt werden, welches beispielsweise durch das Verhältnis zweier Peaks zueinander, wobei ein Peak sich auf das abgeschiedene Gas bezieht, geschlossen wird. Auch andere wie beispielsweise massenspektroskopische Verfahren können vorliegend eingesetzt werden.

Selbstverständlich kann der Innendurchmesser auch direkt durch Messen, beispielsweise Lasermessung ermittelt werden.

Um ein optimiertes Ergebnis zu erlangen, kann das Führen der Strömungsgeschwindigkeitsänderung geregelt mittels des bestimmten Innendurchmessers erfolgen. Dabei kann beispielsweise die Druckdifferenz zwischen dem Prozessraum und dem Hohlraum entsprechend des bestimmten Innendurchmessers und/oder die Rotationsgeschwindigkeit der Vorform entsprechend des gemessenen Innendurchmessers angepasst werden. Auch kann parallel oder ergänzend dazu der Volumenstrom oder die Zusammensetzung des Abscheidegases eingestellt werden.

Der einzustellende Innendurchmesser kann dabei beispielsweise eine Funktion der gewünschten Dotandenkonzentration in der abzuscheidenden Schicht sein. Somit wird bei einem Gradientenindexprofil, dessen Brechzahl sich in jeder Schicht ändert, für jede Schicht ein optimaler Innendurchmesser für die Abscheidung eingestellt.

Bei der Herstellung von Vorformen für Fasern mit einem gleichbleibenden Brechungsindex (Stufenindexprofile) kann demnach ein optimaler Innendurchmesser bestimmt werden und dieser Innendurchmesser wird für die Dauer der Abscheidung konstant gehalten. Das kann erreicht werden, im dem die Vergrößerung des Innendurchmessers an die Dicke der abgeschiedenen Schichten angepasst wird und sich die beiden Effekte somit ausgleichen und die Strömungsgeschwindigkeit konstant gehalten werden kann.

Es ist in einer Ausführungsform auch möglich, dass der Innendurchmesser in Bezug auf eine Reaktionstemperatur eingestellt wird. Durch die Abscheidung nimmt die Wandstärke des zu beschichtenden Rohres stetig zu, so dass die Leistung des Brenners erhöht werden muss um im Rohrinneren eine konstante Reaktionstemperatur zu erzeugen. Dem kann entgegengewirkt werden, wenn durch das erfindungsgemäße Verfahren ein Vergrößern des Innendurchmessers erfolgt, so dass die Wandstärke sich nicht, oder deutlich weniger ändert, als bei beispielsweise konstantem Außendurchmesser. Damit wird eine starke Änderung der Brennerleistung vermieden.

Um letztendlich eine Glasfaser beispielsweise für die Kommunikation und Nachrichtentechnik zu erhalten, kann die Vorform zu einer Glasfaser, insbesondere der Multimodenfaser, weiterverarbeitet werden.

Diese Multimodenfasern weisen insbesondere ein graduiertes Brechzahlprofil auf, welches definiert prozesstechnisch mittels des Prozessparameters Δv eingestellt wurde.

Mit einem zuvor beschriebenen Verfahren wird eine Vorform oder eine Glasfaser hergestellt.

Ein Kommunikationssystem kann eine zuvor beschriebene Glasfaser aufweisen.

Im Weiteren wird die Erfindung anhand eines Ausführungsbeispiels erläutert. In der einzigen

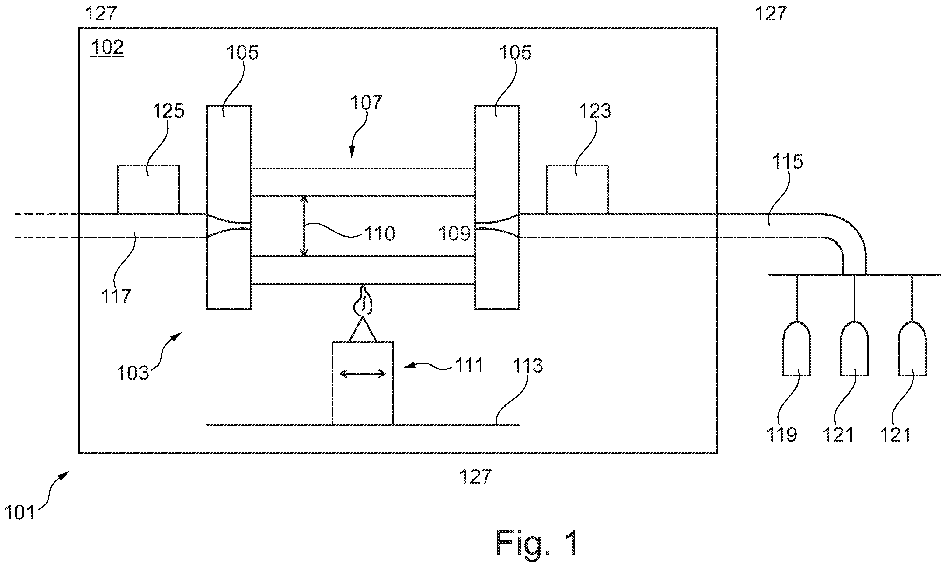

Figur 1 ist eine stark schematische Schnittdarstellung einer Prozessanlage zum Herstellen einer Vorform mittels des erfindungsgemäßen Verfahrens dargestellt.

Eine Prozessanlage 101 weist einen Prozessraum 102 und eine Glasdrehbank 103 auf. An der Glasdrehbank 103 sind zwei Vorformhalter 105 gegenüberliegend angeordnet. Zwischen den Vorformhaltern 105 ist die Vorform als Glaszylinder 107 eingespannt. Dieser Glaszylinder 107 weist einen Hohlraum 109 auf. Der Innendurchmesser 110 des Hohlraums 109 beträgt anfänglich 26mm. Der Außendurchmesser beträgt 29mm.

Vorliegend erfolgt eine modifizierte chemische Gasphasenabscheidung (MCVD), bei der ein Knallgasbrenner 111 entlang einer Schiene 113 hin- und herfährt und dem Glaszylinder 107 eine entsprechende Wärme(energie) aufprägt.

Dem Hohlraum 109 des Glaszylinders 107 ist ein Gaseinlass 115 zugeordnet. Der Gaseinlass 115 ist mit einer Reihe von Vorratsbehältern über eine optionale Mischkammer verbunden. Im Vorratsbehälter 119 wird die glasbildende Substanz (in der Regel $SiCl_4$) auf einer definierten Temperatur vorgehalten und mit einem Trägergas durchströmt. Die Dosierung erfolgt über geeignete Dosiersysteme wie beispielsweise MFC's (Mass-Flow-Controller). In den weiteren Vorratsbehältern 121 werden weitere Substanzen vorgehalten. Dabei handelt es sich um leicht flüchtige Verbindungen von den gewünschten Dotanden. Häufig werden hier $POCl_3$, $GeCl_4$, $BCl_3$ eingesetzt. Weiterhin können über Gasleitungen (nicht dargestellt) noch weitere Gase (Transportgase, Inertgase, Ätzmittel, Dotanden) zugeführt werden.

Über entsprechende steuerbare Druckminderer (nicht dargestellt) kann die Durchflussmenge und kann jeweils die Konzentration der einzelnen Stoffe eingestellt werden.

Zudem ist an dem Gaseinlass 115 ein IR-Spektrometer 123 angeordnet. Dieses IR-Spektrometer 123 bestimmt die Spektren des Abscheidegases, welches durch den Gaseinlass 115 in den Hohlraum 109 des Glaszylinders 107 geführt werden.

Auf der gegenüberliegenden Seite ist ein Gasauslass 117 angeordnet. Dieser Gasauslass 117 umfasst ebenfalls ein IR-Spektrometer 125, welches die Zusammensetzung des Gases im Gasauslass 117 spektroskopisch bestimmt.

In dem Glaszylinder 107 wird ein Abscheidegas mit einem Gesamtvolumenstrom von 5L/min eingeführt. Der Druck im Prozessraum 102 beträgt 1bar. Zu Beginn des Abscheidens beträgt der Innendruck im Hohlraum 109 des Glaszylinders 107 ebenfalls 1bar.

Nun wird das Abscheidegas über den Gaseinlass 115 in den Hohlraum 109 des Glaszylinders 107 geführt und vorab mittels des IR-Spektrometers 123 die Spektren dieses Gases bestimmt. Zudem fährt der Knallgasbrenner 111 auf der Verfahrschiene 113 hin und her und erwärmt dabei den rotierenden Zylinder und verglast abgeschieden Soot zu Glas.

Am Gasauslass 117 werden ebenfalls die Spektren 125 bestimmt. Aus der Konzentrationsverringerung des verglasten Gases wird relativ zum Transportgas mittels des IR-Spektrometers 125 das Konzentrationsverhältnis bestimmt und auf die abgeschiedene Dicke des Glases im Glaszylinder 107 geschlossen. Der Konzentrationsverringerung entsprechend wird die Dicke des abgeschiedenen Glases bestimmt.

Weiterhin wird entsprechend der Druck des Prozessraums 102 verringert, sodass ein Kompensieren der Innendurchmesserverringerung aufgrund des Abscheidens erfolgt.

Dies wird für jede Glasschicht wiederholt, wobei die Zusammensetzung des Abscheidegases zusätzlich entsprechend dem Bedarf angepasst wird.

Bezugszeichenliste

101 Prozessanlage
102 Prozessraum
103 Glasdrehbank
105 Vorformhalter
107 Glaszylinder
109 Hohlraum
110 Innendurchmesser
111 Knallgasbrenner
113 Verfahrschiene
115 Gaseinlass
117 Gasauslass
119 Gasflasche
121 Gaserzeugungsofen
123 Einlass-IR-Spektrometer
125 Auslass-IR-Spektrometer
127 Umgebung

**Patentansprüche**

1. Verfahren zum definierten Abscheiden einer Glasschicht an einer Innenwand einer Vorform für eine optische Faser und/oder zum Einstellen eines Brechzahlprofils einer Vorform für eine Multimodenfaser, wobei in einem durch die Innenwand gebildeten Hohlraum der Vorform ein Abscheidegas mit einer Strömungsgeschwindigkeit v ausbreitet, wobei sich aufgrund des Abscheidens eine Strömungsgeschwindigkeitsänderung

$$\Delta v = \frac{4Q}{\pi} \cdot \left( \frac{1}{d_i^2} - \frac{1}{d_{i+1}^2} \right)$$

mit einem Volumenstrom Q, dem Erstdurchmesser $d_i$ und dem Zweitdurchmesser $d_{i+1}$ ausbildet, wobei der Erstdurchmesser $d_i$ ein Innendurchmesser vor einem Abscheiden einer Glasschicht und der Zweitdurchmesser $d_{i+1}$ ein Innendurchmesser nach dem Abscheiden der Glasschicht frei von einer Einflussnahme auf die Strömungsgeschwindigkeit v ist, **dadurch gekennzeichnet, dass** das Abscheiden bei einer verringerten Strömungsgeschwindigkeitsänderung a*Δv geführt wird, wobei a<0,95 ist.

2. Verfahren nach Anspruch 1, **dadurch gekennzeichnet, dass** a<0,9 oder a<0,8 oder a<0,7 oder a<0,6 oder a<0,4 oder a<0,35 ist.

3. Verfahren nach einem der vorherigen Ansprüche, **dadurch gekennzeichnet, dass** durch ein Aufweiten eines Innendurchmessers die Strömungsgeschwindigkeitsänderung Δv verändert wird.

4. Verfahren nach einem der vorherigen Ansprüche, **dadurch gekennzeichnet, dass** für jede abzuscheidende Schicht eine optimale Strömungsgeschwindigkeitsänderung Δv eingestellt wird.

5.  Verfahren nach Anspruch 3 oder 4, **dadurch gekennzeichnet, dass** der Innendurchmesser durch einen Differenzdruck zwischen dem Hohlraum und einem Prozessraum und/oder durch Ändern einer Rotationsgeschwindigkeit der Vorform aufgeweitet wird.

6.  Verfahren nach einem der vorherigen Ansprüche, **dadurch gekennzeichnet, dass** eine Zusammensetzung des Abscheidegases verändert wird.

7.  Verfahren nach einem der vorherigen Ansprüche, **dadurch gekennzeichnet, dass** der Volumenstrom Q des Abscheidegases verändert wird.

8.  Verfahren nach einem der vorherigen Ansprüche, **dadurch gekennzeichnet, dass** ein Bestimmen des Innendurchmessers erfolgt.

9.  Verfahren nach Anspruch 8, **dadurch gekennzeichnet, dass** das Führen der Strömungsgeschwindigkeitsänderung geregelt mittels des bestimmten Innendurchmessers erfolgt.

10. Verfahren nach einem der vorherigen Ansprüche, **dadurch gekennzeichnet, dass** die Vorform zu einer Glasfaser, insbesondere der Multimodenfaser, weiterverarbeitet wird.

**Claims**

1.  A method for the defined deposition of a glass layer on an inner wall of a preform for an optical fiber and/or for setting a refractive index profile of a preform for a multi-mode fiber, wherein a deposition gas spreads at a flow speed v in a cavity of the preform formed by the inner wall, wherein a flow speed change

$$\Delta v = \frac{4Q}{\pi} \cdot \left( \frac{1}{d_i^2} - \frac{1}{d_{i+1}^2} \right)$$

with a volume flow Q, the first diameter $d_i$ and the second diameter $d_{i+1}$ is formed due to the deposition, wherein the first diameter $d_i$ is an inner diameter before a glass layer is deposited and the second diameter $d_{i+1}$ is an inner diameter after the deposition of the glass layer, free from any influence on the flow speed v, **characterized in that** the deposition is carried out at a reduced flow speed change a*$\Delta v$, where a < 0.95.

2.  The method according to claim 1, **characterized in that** a < 0.9 or a < 0.8 or a < 0.7 or a < 0.6 or a < 0.4 or a < 0.35.

3.  The method according to one of the previous claims, **characterized in that** the flow speed change $\Delta v$ is changed by expanding an inner diameter.

4.  The method according to one of the previous claims, **characterized in that** for each layer to be deposited an optimum flow speed change $\Delta v$ is set.

5.  The method according to claim 3 or 4, **characterized in that** the inner diameter is expanded by a differential pressure between the cavity and a process chamber and/or by changing a rotational speed of the preform.

6.  The method according to one of the previous claims, **characterized in that** a composition of the deposition gas is changed.

7.  The method according to one of the previous claims, **characterized in that** the volume flow Q of the deposition gas is changed.

8.  The method according to one of the previous claims, **characterized in that** a determination of the inner diameter is carried out.

9.  The method according to claim 8, **characterized in that** control of the flow speed change is carried out in a regulated manner by means of the determined inner diameter.

10. The method according to one of the previous claims, **characterized in that** the preform is further processed into a glass fiber, in particular the multi-mode fiber.

**Revendications**

1.  Procédé pour le dépôt défini d'une couche de verre sur une paroi intérieure d'une préforme pour une fibre optique et/ou pour le réglage d'un profil d'indice de réfraction d'une préforme pour une fibre multimode, où un gaz de dépose se propage à une vitesse d'écoulement v dans une cavité de la préforme formée par la paroi intérieure, où un changement de vitesse d'écoulement

$$\Delta v = \frac{4Q}{\pi} \cdot \left( \frac{1}{d_i^2} - \frac{1}{d_{i+1}^2} \right)$$

avec un débit volumique Q, le premier diamètre $d_i$ et le deuxième diamètre $d_{i+1}$ se forme en raison du dépôt, où le premier diamètre $d_i$ est un diamètre intérieur avant le dépôt d'une couche de verre et le deuxième diamètre $d_{i+1}$ est un diamètre intérieur après le dépôt de la couche de verre exempt de toute influence de la vitesse d'écoulement v, **caractérisé**

**en ce que** le dépôt est effectué avec un changement de vitesse d'écoulement a*Δv réduit, où a<0,95.

2. Procédé selon la revendication 1, **caractérisé en ce que** a < 0,9 ou a < 0,8 ou a < 0,7 ou a < 0,6 ou a < 0,4 ou a < 0,35.

3. Procédé selon l'une des revendications précédentes, **caractérisé en ce que** le changement de vitesse d'écoulement Δv est changé par l'élargissement d'un diamètre intérieur.

4. Procédé selon l'une des revendications précédentes, **caractérisé en ce que** pour chaque couche à déposer, un changement optimal de vitesse d'écoulement Δv est réglé.

5. Procédé selon la revendication 3 ou 4, **caractérisé en ce que** le diamètre intérieur est élargi par une pression différentielle entre la cavité et une chambre de traitement et/ou par le changement d'une vitesse de rotation de la préforme.

6. Procédé selon l'une des revendications précédentes, **caractérisé en ce qu'**une composition du gaz de dépose est modifiée.

7. Procédé selon l'une des revendications précédentes, **caractérisé en ce que** le débit volumique Q du gaz de dépose est modifié.

8. Procédé selon l'une des revendications précédentes, **caractérisé en ce qu'**une détermination du diamètre intérieur est effectuée.

9. Procédé selon la revendication 8, **caractérisé en ce que** le contrôle du changement de vitesse d'écoulement se fait de manière réglée au moyen du diamètre intérieur déterminé.

10. Procédé selon l'une des revendications précédentes, **caractérisé en ce que** la préforme est ensuite traitée pour former une fibre optique, en particulier la fibre multimode.

Fig. 1

EP 3 328 804 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4813989 A
- JP 62012181 B
- JP 3052418 B
- EP 1719739 A
- US 2013081430 A
- JP S5864236 A
- US 2006185398 A1